# EUROPEAN PATENT APPLICATION

(11) **EP 2 591 945 A2**
(43) Date of publication of application: **15.05.2013**
(21) Application number: 12192051.6
(22) Date of filing: 09.11.2012
(51) Int. Cl.: B60N 2/06, B60N 2/24

(54) **Wheelchair access for a passenger vehicle**

(30) Priority: 10.11.2011 GB 201119435
(71) Applicant: NMI Safety Systems Ltd., London N17 0YX (GB)
(72) Inventor: Sawdy, Michael, London, Greater London N17 0YX (GB)
(74) Representative: Beattie, Alex Thomas Stewart

(57) **Abstract**

An arrangement and method for accommodating a wheelchair in a passenger vehicle, the arrangement including: first and second seating rows each having one or more seats therein, the seats in the first and second seating rows each having a seat back and a seat squab, the seat squab being removable, the seats in the first seating row movable with respect to the floor of the vehicle in a movement direction which extends between the first and second seating rows; and the seats in the first row may be moved from an initial position, in which the first and second seating rows are spaced apart in a suitable manner to accommodate able bodied passengers, to a final position for accommodating a wheelchair, in which, relative to the initial position, the first seating row is moved in the movement direction away from the second seating row so that the space between the first and second seating rows is increased.

## Description

This invention relates to wheelchair access for a passenger vehicle, and in particular concerns a method and apparatus for allowing a wheelchair to be efficiently accommodated in a passenger vehicle having a side lift.

It is often necessary to accommodate a wheelchair user in a passenger vehicle, such as a mini bus, bus or coach. In many countries regulations now require certain passenger vehicles to be able to accommodate at least a minimum number of wheelchair occupants, and in any event many operators of passenger services consider that their vehicles should be able to carry wheelchair users.

In modern passenger vehicles the number of passengers that can be carried on a particular journey is of prime importance - clearly, if the number of paying passengers that are carried by a vehicle can be maximised, the revenue to the vehicle operator can be maximised. It is sometimes said that, for a full-sized passenger coach carrying around fifty passengers, it is the money generated by the front four seats that generates the profit for a journey. This serves to exaggerate how important it is to allow the maximum number of passengers to be carried on a vehicle.

In passenger coaches the spacing between rows of seats is carefully planned - the spacing is a trade-off between, on the one hand, allowing each passenger as much space and comfort as possible, and on the other hand fitting in as many seats as possible. In the UK, regular passenger coaches generally have a spacing between successive rows of seats of around 735mm. A wheelchair user cannot generally fit in amongst regular, fixed seats which are designed for able-bodied passengers. Various schemes have been proposed to allow wheelchair users to be accommodated. The most basic is to leave a relatively large space within the vehicle, in which a wheelchair can be positioned. However, clearly it is undesirable to leave a permanent large space as, for regular passenger services, there will be no wheelchair user on most journeys. During these journeys, there is a loss of potential revenue that could have been earned from seats in the region of the space.

It has therefore been proposed to provide seats that, for most journeys, are fixed in place and can be used by able bodied passengers, but which can be moved or reconfigured for those journeys where a wheelchair user needs to be accommodated, to allow the wheelchair to be positioned on the vehicle. The most simple of these schemes involves seats which are usually fixed to the floor of the vehicle, for instance by bolts, and can be unfixed and removed as required. This is not a very practical solution, however. Firstly, unbolting the seats from the floor is a relatively long and labour-extensive task, and would be particularly difficult if only the driver of the vehicle was available to carry out the necessary work. Secondly, the seats that have been removed must then be stored at a depot, from which they will need to be retrieved again in the future, or in the vehicle's hold, where they will occupy valuable space that could be used for passengers' luggage.

More recently, it has been proposed to provide seats which can be reconfigured by being repositioned within the vehicle, so that the seats do not need to be removed and stowed in another location, and to provide systems which allow the seats to be moved easily by one person. One example of such a system is described in GB2430356.

Known systems of this type are generally only effective for vehicles which have their wheelchair lift at the front, near the driver's cabin. Such systems have not been found to be practical for vehicles which have a wheelchair lift on one side.

It is an object of the present invention to alleviate some or all of the above difficulties.

Accordingly, the present invention provides an arrangement for a passenger vehicle, comprising a first seating row, having one or more seats therein, and a second seating row, having one or more seats therein, wherein the or each seat in the first and second seating rows has a seat back and a seat squab, the seat squab removable from the or each seat, the or each seat in the first seating row is movable with respect to the floor of the vehicle in a movement direction which extends between the forward and rear seating rows, and the or each seat in the first seating row may be moved from an initial position, in which the first and second seating rows are spaced apart in a suitable manner to accommodate able bodied passengers, to a final position for accommodating a wheelchair, in which, relative to the initial position, the first seating row is moved in a movement direction away from the second seating row, so that the space between the first and second seating rows is increased.

Preferably, the second seating row is also moveable with respect to the floor of the vehicle, in a movement direction which extends between the first and second seating rows, and is moved in a direction away from the first seating row.

Alternatively, the second seating row is also moveable with respect to the floor of the vehicle, in a movement direction which extends between the first and second seating rows, and is moved in the same direction as the first seating row.

Conveniently, the first and second seating rows each contain at least two seats.

Advantageously, the seats in the first and second seating rows are independently movable in the movement direction.

Preferably, in the initial position, the seats in the first and second seating rows are substantially parallel with one another.

Conveniently, in the final position, the seats in the first and second seating rows are substantially parallel with one another.

Advantageously, the seats in the seating rows can move from the initial position to the final position substantially without rotating.

Preferably, the seating arrangement comprises a third seating row containing one or more seats, towards which the first seating row moves when it moves in the movement direction away from the second seating row, wherein, when the first seating row is in the final position, the first seating row lies close to, or touches, the third seating row.

Conveniently, the seating arrangement comprises a fourth seating row containing one or more seats, towards which the second seating row moves when it moves in the movement direction away from the first seating row, wherein, when the second seating row is in the final position, the second seating row lies close to, or touches, the fourth seating row.

Advantageously, the seats in the fourth seating row each have a seat back and a seat squab, the seat squab being removable.

Preferably, the first and second seating rows both face in a forward direction of travel, and the first seating row moves substantially in the forward direction of travel to move to from the initial position to the final position.

Conveniently, the first and second seating rows both face in a forward direction of travel, and the second seating row moves in a direction which is substantially opposite to the forward direction of travel to from the initial position to the final position.

Advantageously, the seating arrangement comprises one or more anchoring points to which securing tethers may be attached to secure a wheelchair in place.

Preferably, at least one anchoring point is provided on, or is fixed to, a base of one of the seats in the first or second seating rows.

Conveniently, the seating arrangement further comprises a lift adapted to lift a wheelchair from ground level to be substantially level with the floor of the vehicle, the lift being positioned to deliver the wheelchair into the interior of the vehicle in a location between the first and second seating rows.

Advantageously, the first and second seating rows are adjacent a side surface of the vehicle.

A further aspect of the present invention provides a method of accommodating a wheelchair in a passenger vehicle having a first seating row having one or more seats therein and a second seating row, having one or more seats therein, each of the seats having a seat back and a seat squab, the method comprising the steps of removing the seat squabs of the seats in the first and second seating rows, and moving the seats in the first and seating row from an initial position, in which the first and second seating rows are spaced apart in a suitable manner to accommodate able bodied passengers, to a final position for accommodating a wheelchair, in which, relative to the initial position, the first seating row is moved in a movement direction away from the second seating row, the movement direction being the direction which extends between the first and second seating rows, so that the space between the first and second seating rows is increased.

Preferably, the method further includes the step of moving the seats in the second seating row in a movement direction away from the forward seating row, the movement direction being the direction which extends between the forward and rear seating rows.

Alternatively, the method further includes the step of moving the seats in the second seating row in a movement direction towards the forward seating row, the movement direction being the direction which extends between the forward and rear seating rows.

Conveniently, the method further includes the step, after the seats are moved to the final position, of placing a wheelchair between the forward and rear seating rows.

Advantageously, the wheelchair is introduced into the vehicle by means of a lift which is located adjacent a side of the vehicle.

In order that the present invention may be more readily understood embodiments will now be described, by way of example, with reference to the accompanied drawings, in which:
Figures 1 a and 1 b show an initial configuration of seating in a vehicle;
Figures 2a, 2b, 3a and 3b show stages in the repositioning of the seats shown in figures 1 a and 1 b;
Figures 4a and 4b show the accommodation of a wheelchair in the vehicle following the repositioning of the seats; and
Figures 5a and 5b show an alternative positioning of the seats shown in figures 1 a and 1 b.

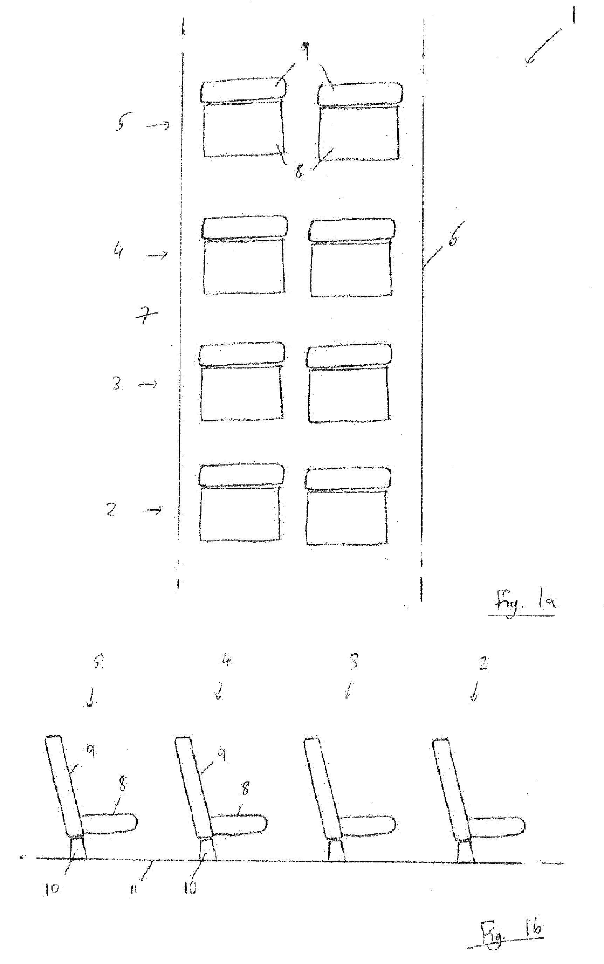

Turning firstly to Figure 1a, a schematic top-down view of one side of a passenger vehicle 1, such as a coach, is shown. Positioned within the vehicle 1 are four rows of seats, each row containing two seats. The seats are forward-facing, and the rows of seats are generally parallel with one another. First to fourth rows of seats 2-5 are shown. The seats 2-5 are positioned between an external side wall 6 of vehicle 1, and an aisle 7 which runs generally along the centre of the vehicle 1. Further rows of seats (not shown) may be provided on the other side of the aisle 7.

A schematic side view of the seats 2-5 is shown in Figure 1 b.

Figures 1 a and 1 b show a conventional layout of seating in a passenger coach. It should be understood, however, that the present invention is applicable to other layouts of passenger vehicle, including vehicles with one seat, or three or more seats, in each row, vehicles in which the rows are not evenly spaced and/or do not contain seats that are completely aligned with one another, and vehicles in which some or all of the seats are not forward-facing.

The vehicle 1 has a wheelchair lift which is positioned at a side thereof. The lift itself is not shown in the figures. The lift is operable to gather a wheelchair occupant from ground level, and to lift the occupant up to be substantially level with the floor or the vehicle 1. A portion of the side surface 6 of the vehicle 1, generally opposite the second and third rows of seats 3, 4, can be opened to allow the wheelchair occupant to enter the interior of the vehicle 1 after being lifted up by the lift.

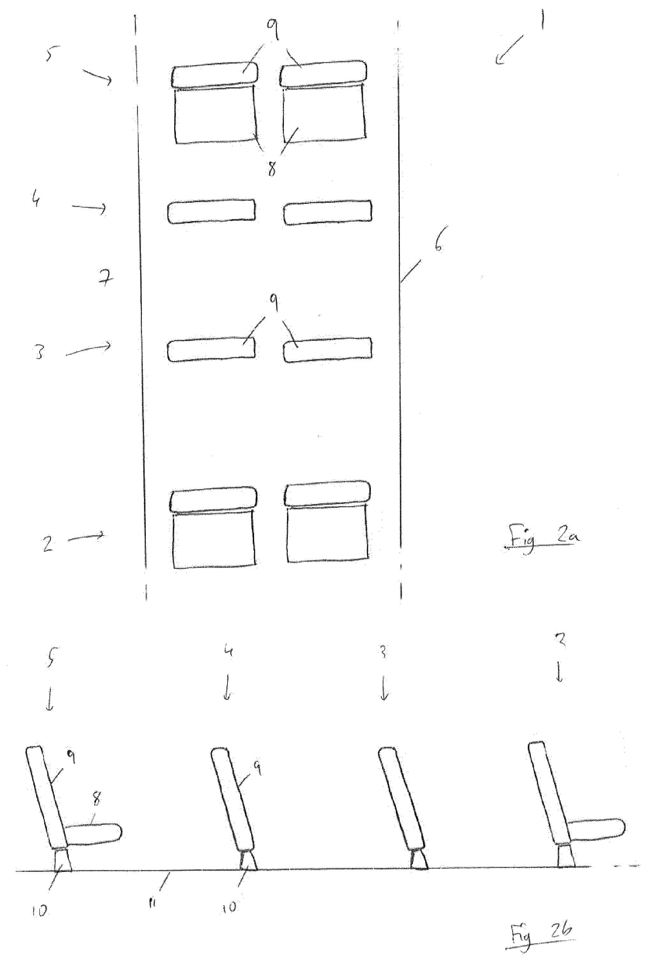

Figures 2a and 2b show a first step in configuring the seats 2-5 to accommodate the wheelchair user. Each seat 2-5 comprises a seat squab 8, a seat back 9 and a mounting arrangement 10, by which the seat is fixed to the floor 11 of the vehicle 1.

In the first step of configuring the vehicle 1, the seat squabs 8 are removed from the second and third rows of seats 3, 4. This situation is shown in Figures 2a and 2b. The squabs 8 of the second and third rows of seats 3, 4 are preferably adapted to be readily removed and re-attached, and the skilled person will appreciate several ways in which this may be achieved.

Following removal the seat squabs 8 can be stored in a convenient location, for instance in an overhead luggage container, or in a luggage hold of the vehicle 1.

In alternative embodiments the squabs 8 of the second and third rows of seats 3, 4 may be folded upwardly so as to lie flat against the seat backs 9 in a stowed configuration. However, it is anticipated that it will be more preferable to remove the seat squabs 8 entirely, as it is important to free as much space as possible to accommodate the wheelchair user, and the squabs of passenger coach seats are often of a considerable depth.

As a next step in the configuration of the vehicle 1, the second row of seats 3 may be moved in a forward direction towards the rear of the first row of seats 2. Since the squabs 8 of the second row of seat 3 have been removed or stowed, the seat backs 9 of the second row of seats 3 can be moved to so that they are close to, or even touching, the rear of the seat backs 9 of the first row of seats 2.

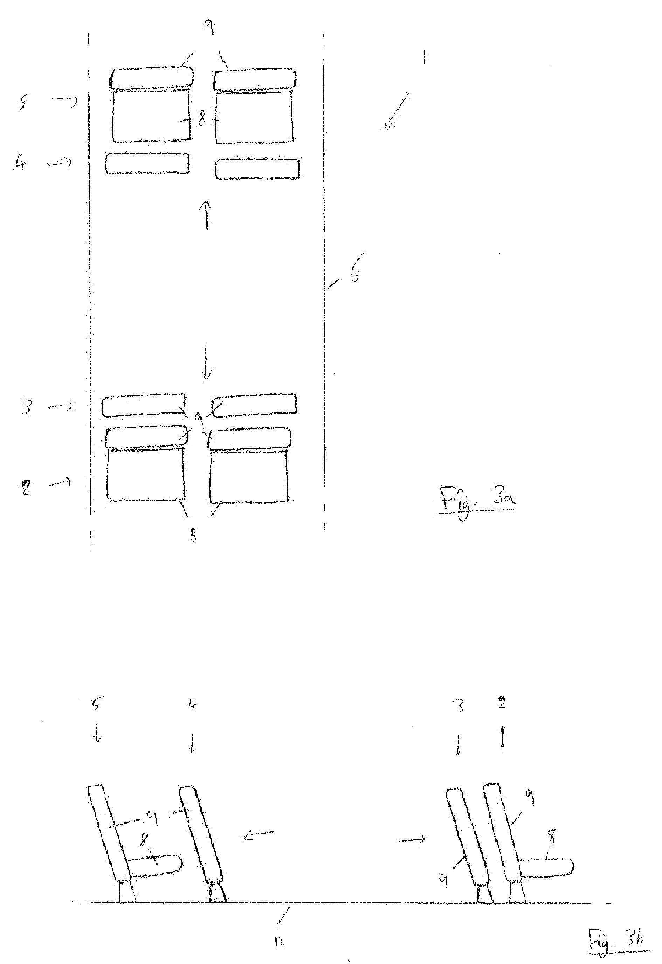

The third row of seats 4 may also be moved rearwardly, towards the back of the vehicle 1, until the seat backs 9 of the third row of seats 4 lie close to, or touch, the fronts of the squabs 8 of the fourth row of seats 5. This arrangement is shown in Figures 3a and 3b.

In an alternative configuration, the second row of seats 3 may be moved in a forward direction towards the rear of the first row of seats 2, with the third row of seats 4 retained in the normal position. This movement may then make sufficient space to accommodate a wheelchair. This particular configuration may be particularly useful where the third row of seats 4 is the rearmost row of seats in the vehicle. In such a situation, the third row of seats 4 may not necessarily be moved backward. Therefore, the space generated by the movement of the second row of seats 3 may be sufficient to accommodate a wheelchair.

The second row of seats 3 may also move backward so they are close to, or even touching, the front of the seatbacks of the third row of seats 4, as opposed to moving the second row of seats 3 forward toward the first row of seats 2. This, again, would be useful in a situation where the third row of seats is the rear row of seats in the vehicle.

This situation may also be reversed, with the third of row of seats moving back, but it is expected that this particular configuration may only be useful in situations where the spacing between the rows of seats 2, 3, 4, 5 is relatively large. In all of these scenarios, it is important that the seat squabs 8 can be removed, to maximise the available space.

As a further alternative, the second and third rows of seats 3, 4 may both be movable in the same direction, that is both in a forward direction or both in a rearward direction, to create sufficient space to accommodate a wheelchair. The second row of seats 3 may be moved forward so that they are close to, or even touching, the rear of the seatbacks of the first row of seats 2. The third row of seats 4 may then be moved forward so that they are close to, or even touching, the seatbacks of the second row of seats 3.

Alternatively, if the seats are to be moved forward, the third row of seats 4 may be moved backward so that they are close to, or even touching, the front of the seatbacks of the fourth row of seats 5. The second row of seats 3 may then be moved backward so that they are close to, or even touching, the seatbacks of the third row of seats 4.

It will be appreciated that these steps require the second and third rows of seats 3, 4 to be movable longitudinally with respect to the vehicle 1. There are several ways in which this may be achieved. One possibility is that longitudinal tracks are provided in the floor of the vehicle 1 and the second and third rows of seats 3, 4 may be moved along these tracks, and locked in place at various locations along the length of the tracks. The arrangement may be that the seats 3, 4 can be locked in place at any position along the length of the tracks, or alternatively, the tracks may be provided with spaced apart locking sites, and the seat 3, 4 can only be locked in place at one of these sites.

As another alternative, a series of separate attachment sites may be provided in the vehicle floor, and for each seat 3, 4 a first attachment site is provided for the normal layout (i.e. as shown in Figures 1a and 1b) and a second attachment site is provided for the locations to which the seats must move when a wheelchair user is to be accommodated (i.e. the positions shown in Figures 3 and 3b).

Any other suitable method of moving the seats 3, 4 may be used. However, it is preferably that the movement mechanism can be operated by one individual, as it is likely to be the case that the driver of the vehicle 1 must operate the mechanism single-handedly.

For this reason, in preferred embodiments the individual seats in the second and third rows of seats 3, 4 may be moved separately, rather than the seats in each row 3, 4 moving as one single block - moving one seat at a time is likely to require less force to be required, and therefore the job will be more readily achievable by one individual.

It will be appreciated that, in the configuration shown in figures 3a and 3b, a relatively large space is present between the second and third rows of seats 3, 4. The removal of the squabs 8 of the second row of seats 3 allows the second row of seats to be positioned very close to the first row of seats 2, and the removal of the squabs 8 of the third row of seats 4 means that the squabs 8 do not obstruct the space that has been created.

In the configuration shown in figures 3a and 3b, there is preferably a usable distance of at least 1300mm between the second and third rows of seats 3, 4.

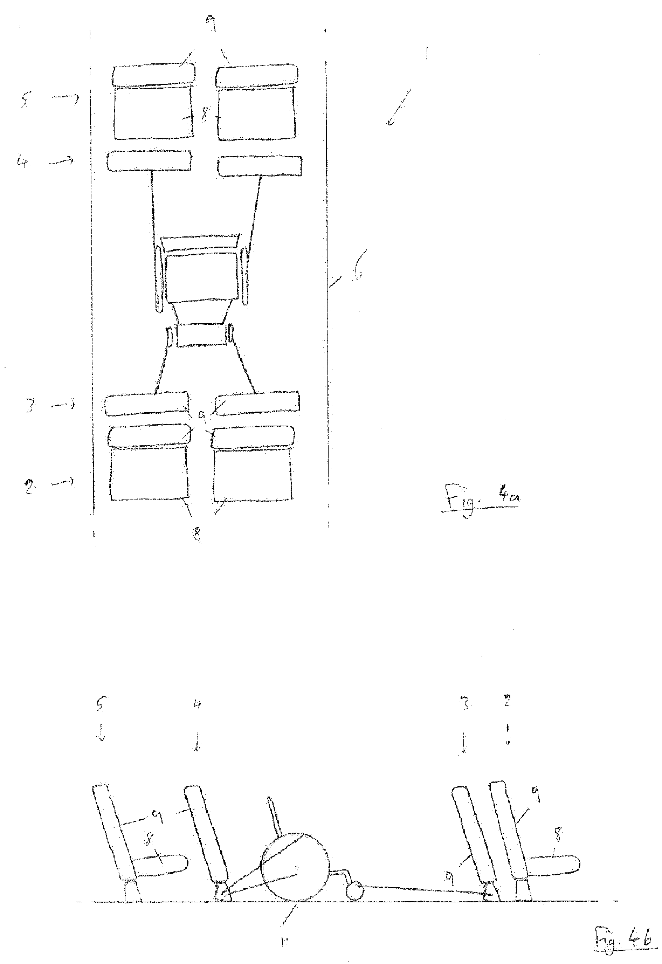

Next, a wheelchair 12 is introduced into the space that has been created by moving the second row of seats 3 forwardly, and the third set of seats 4 rearwardly. The wheelchair 12 is preferably installed in the space in a forward-facing direction, as shown in Figures 4a and 4b.

It will generally be necessary to secure the wheelchair 12 with respect to the vehicle 1 for safety reasons. One preferred way in which that can be achieved is to provide a series of securing tethers 13, which may be attached to points on the wheelchair 12 (for instance, to parts of the frame of the wheelchair 12). The securing tethers 13 may preferably be attached to the bases 10 of the second and/or third rows of seats 3, 4. When attaching the wheelchair 12 to the floor 11 of the vehicle 1, it is desirable to use anchor points on the vehicle which are spaced apart as far as possible from the wheelchair 12. While it would be possible to provide anchor points which are formed in/on the floor 11 of vehicle 1, attaching the securing tethers 13 to these points would result in the anchor points being provided relatively close to the wheelchair 12 itself. Providing anchor points which are attached to, or formed as part of, the bases 10 of the second row of seats 3 and/or the third row of seats 4 allows the anchor points to be spaced apart as far as possible from the wheelchair 12.

In the embodiment depicted in Figures 4a and 4b, two pairs of securing tethers 13 are attached to the bases 10 of the third row of seats 4, and the securing tethers 13 are attached to locations towards the rear of the wheelchair 12. A further pair of securing tethers 13 is attached to the bases 10 of the second row of seats 4, and these securing tethers 13 are attached to locations towards the front of the wheelchair 12.

Once a journey has been completed and the wheelchair user has left the vehicle 1, the seating of the vehicle 1 can be returned to the default configuration by reversing the steps described above. The second and third rows of seats 3, 4 may be moved with respect to the vehicle floor 11 back to their initial positions, and the way in which the seats 2, 3, 4, 5 are moved to return the vehicle to the default configuration will depend on the way in which the seats 2, 3, 4, 5 have been moved. The squabs 8 of the seats are also re-attached. The vehicle 1 is then once again ready to accommodate able bodied passengers in the normal way.

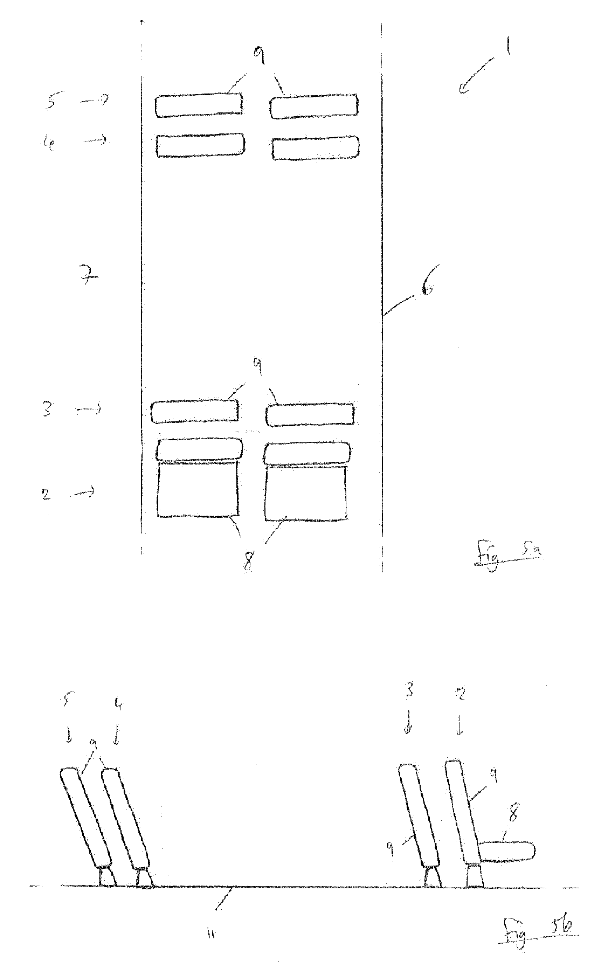

Figure 5a shows an alternative configuration to which the seats 2-5 may be moved. In this configuration, the squabs 8 of the second, third and fourth rows of seats 3-5 are removed/stowed. The third row of seats 4 can then be moved rearwardly by a greater amount, until the seat backs 9 of the third row of seats 4 lie close to, or touch, the seat backs 9 of the fourth row of seats 5. It will be appreciated that this creates additional space as compared to the configuration shown in Figures 3a, 3b, 4a and 4b. This may be necessary if regulations require that additional space is needed for a wheelchair, if a particularly large wheelchair is presented, or if a vehicle having particularly closely-spaced seats must be re-configured to accommodate a wheelchair user.

It will be understood that embodiments of the present invention provide a simple and advantageous arrangement by which a wheelchair user can be accommodated in a passenger vehicle, particularly when a wheelchair lift is provided at a side of the vehicle.

In this specification the terms "forward" and "rear" are used. In most embodiments these terms will refer to the direction of travel of the vehicle, or the front-back direction of a vehicle, or the direction in which the seats face. However, it should be understood that this is not essential. The "forward" direction refers to the movement of the seats, and may be any direction, which is not necessarily parallel with the direction of travel of the vehicle or the direction in which some or all of the seats face.

In this specification a "direction" may refer to an axis, and movement in that direction may refer to movement in either direction along the axis.

When used in this specification and claims, the terms "comprises" and "comprising" and variations thereof mean that the specified features, steps or integers are included. The terms are not to be interpreted to exclude the presence of other features, steps or components.

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. An arrangement for a passenger vehicle, comprising:
a first seating row, having one or more seats therein; and
a second seating row, having one or more seats therein, wherein:
the or each seat in the first and second seating rows has a seat back and a seat squab, the seat squab removable from the or each seat;
the or each seat in the first seating row is movable with respect to the floor of the vehicle in a movement direction which extends between the forward and rear seating rows; and
the or each seat in the first seating row may be moved from an initial position, in which the first and second seating rows are spaced apart in a suitable manner to accommodate able bodied passengers, to a final position for accommodating a wheelchair, in which, relative to the initial position, the first seating row is moved in a movement direction away from the second seating row, so that the space between the first and second seating rows is increased.

2. An arrangement according to claim 1, wherein the second seating row is also moveable with respect to the floor of the vehicle, in a movement direction which extends between the first and second seating rows, and is moved in a direction away from the first seating row.

3. An arrangement according to claim 1, wherein the second seating row is also moveable with respect to the floor of the vehicle, in a movement direction which extends between the first and second seating rows, and is moved in the same direction as the first seating row.

4. An arrangement according to any one of claims 1-3, wherein the first and second seating rows each contain at least two seats; and/or the seats in the first and second seating rows are independently movable in the movement direction.

5. An arrangement according to any preceding claim in which, in the initial position, the seats in the first and second seating rows are substantially parallel with one another; and/or, in the final position, the seats in the first and second seating rows are substantially parallel with one another; and/or the seats in the seating rows can move from the initial position to the final position substantially without rotating.

6. An arrangement according to any preceding claim, comprising a third seating row containing one or more seats, towards which the first seating row moves when it moves in the movement direction away from the second seating row, wherein, when the first seating row is in the final position, the first seating row lies close to, or touches, the third seating row.

7. An arrangement according to any one of claims 2-6, comprising a fourth seating row containing one or more seats, towards which the second seating row moves when it moves in the movement direction away from the first seating row, wherein, when the second seating row is in the final position, the second seating row lies close to, or touches, the fourth seating row; and/or the seats in the fourth seating row each have a seat back and a seat squab, the seat squab being removable.

8. An arrangement according to any preceding claim wherein the first and second seating rows both face in a forward direction of travel, and the first seating row moves substantially in the forward direction of travel to move to from the initial position to the final position.

9. An arrangement according to any one of claims 2-7, wherein the first and second seating rows both face in a forward direction of travel, and the second seating row moves in a direction which is substantially opposite to the forward direction of travel to from the initial position to the final position.

10. An arrangement according to any preceding claim, further comprising one or more anchoring points to which securing tethers may be attached to secure a wheelchair in place; and/or at least one anchoring point is provided on, or is fixed to, a base of one of the seats in the first or second seating rows.

11. An arrangement according to any preceding claim, comprising a lift adapted to lift a wheelchair from ground level to be substantially level with the floor of the vehicle, the lift being positioned to deliver the wheelchair into the interior of the vehicle in a location between the first and second seating rows; and/or the first and second seating rows are adjacent a side surface of the vehicle.

12. A method of accommodating a wheelchair in a passenger vehicle having a first seating row having one or more seats therein and a second seating row, having one or more seats therein, each of the seats having a seat back and a seat squab, the method comprising the steps of:
removing the seat squabs of the seats in the first and second seating rows; and
moving the seats in the first and seating row from an initial position, in which the first and second seating rows are spaced apart in a suitable manner to accommodate able bodied passengers, to a final position for accommodating a wheelchair, in which, relative to the initial position, the first seating row is moved in a movement direction away from the second seating row, the movement direction being the direction which extends between the first and second seating rows, so that the space between the first and second seating rows is increased.

13. A method according to claim 12, further comprising the step of moving the seats in the second seating row in a movement direction away from the forward seating row, the movement direction being the direction which extends between the forward and rear seating rows.

14. A method according to claim 12, further comprising the step of moving the seats in the second seating row in a movement direction towards the forward seating row, the movement direction being the direction which extends between the forward and rear seating rows.

15. A method according to claims 12-14, further comprising the step, after the seats are moved to the final position, of placing a wheelchair between the forward and rear seating rows; and/or the wheelchair is introduced into the vehicle by means of a lift which is located adjacent a side of the vehicle.
